# FASCICULE DE BREVET EUROPEEN

(11) **EP 0 368 715 B1**
(45) Date de publication et mention de la délivrance du brevet: **10.08.1994**
(21) Numéro de dépôt: 89402959.4
(22) Date de dépôt: 26.10.1989
(51) Int. Cl.: F24D 19/10, F24D 10/00

(54) **Installation et appareil pour le chauffage et la production d'eau chaude sanitaire individuels à partir d'une chaufferie collective**
Anlage und Gerät zur Erwärmung und Herstellung von individuellem, sanitärem Warmwasser aus einer Fernheizungsanlage
Installation and apparatus for individual heating and sanitary hot water production starting from a communal heating system

(30) Priorité: 26.10.1988 FR 8813996
(43) Date de publication de la demande: 16.05.1990
(73) Titulaire: GEMINOX, Société Anonyme, F-29223 Saint Thegonnec (FR)
(72) Inventeur: Kerautret, André, F-29230 Landivisiau (FR); Vourc'h, Jean-Pierre, F-29221 Plounevez-Lochrist (FR)
(74) Mandataire: Chambon, Gérard

(56) Documents cités:
- EP-A- 0 060 011
- DE-A- 3 123 875
- DE-A- 3 533 160
- FR-A- 2 475 698
- FR-A- 2 522 788

## Description

L'invention concerne une installation et un appareil pour le chauffage et la production d'eau chaude sanitaire, à fluide caloporteur, avec distribution par local individuel à partir d'une chaufferie collective.

Il est connu de chauffer des logements et principalement des appartements à partir d'une chaufferie collective à fluide caloporteur et notamment à eau chaude. Toutefois, ce système est souvent abandonné à cause de certains inconvénients tels que:
- difficulté d'équilibrage du débit d'eau par appartement du fait des pertes de charge importantes dans les circuits;
- gaspillage d'énergie du fait du manque de régulation possible par appartement;
- injustice d'une répartition des charges de chauffage proportionnellement à la surface des logements et non par rapport à une consommation réelle;
- nécessité d'installations individuelles propres pour les besoins sanitaires ou déperditions importantes de calories dues aux canalisations de transmission en cas de distribution d'eau sanitaire également collective.

Par contre, le chauffage purement individuel, s'il présente des avantages tels que la facilité de régulation et le calcul de la consommation exacte d'énergie, il présente aussi les inconvénients inhérents à son individualisation et, notamment, les inconvénients dus aux problèmes d'installation (évacuation des fumées, ventilation, ...), aux coûts de l'entretien et des réparations, aux nuisances acoutisques et autres, aux risques de fuites, aux problèmes de sécurité, ...

C'est pourquoi l'inventeur a imaginé une installation qui a les avantages à la fois d'un chauffage individuel et d'un chauffage collectif, sans en avoir les inconvénients.

Le DE-A-3123875 décrit une installation pour le chauffage et la production d'eau chaude sanitaire, à fluide caloporteur, avec distribution par local individuel à partir d'une chaufferie collective qui comporte pour chaque local individuel à chauffer, au moins une canalisation d'arrivée et une canalisation de retour formant un circuit dénommé circuit primaire, lesdites canalisations étant branchées respectivement sur une première entrée et une première sortie d'un conteneur de mélange, ledit conteneur ayant une deuxième entrée et une deuxième sortie et étant aménagé entre ledit circuit primaire et un circuit dénommé circuit secondaire comportant le circuit de chauffage dudit local et un circuit de réchauffage d'eau sanitaire qui est branché sur ledit circuit de chauffage du local et qui est muni d'un échangeur de chaleur entre l'eau sanitaire et le fluide caloporteur, les conduites de sortie et d'entrée du circuit de chauffage du local étant branchées respectivement sur la deuxième entrée et la deuxième sortie du conteneur de mélange. Toutefois, dans le conteneur précité, sont prévus des moyens pour empêcher une circulation de fluide entre les parties supérieure et inférieure de celui-ci.

Par ailleurs, et concernant une toute autre disposition, le FR-A-2475698 montre un échangeur de chaleur constitué par un ballon et au moins une chemise de circulation qui enveloppe ledit ballon.

A partir d'un dispositif voisin du dispostif Allemand précité, l'invention propose une installation qui est remarquable en ce qu'elle comporte un compteur de consommation thermique aménagé de façon à lui permettre de compter les calories utilisées par tout le circuit secondaire, en ce que le circuit de réchauffage d'eau sanitaire est pourvu d'un ballon d'eau sanitaire et en ce que l'échangeur de chaleur entre l'eau sanitaire et le fluide caloporteur est constitué par l'enveloppe extérieure du ballon d'eau sanitaire et par une chemise de circulation dudit fluide caloporteur qui enveloppe ledit ballon, alors que le conteneur de mélange entre les circuits respectivement primaire et secondaire est constitué par ladite chemise de fluide caloporteur.

De la sorte, on retrouve dans une installation de ce type, les mêmes avantages que ceux d'un chauffage individuel, sans en avoir les inconvénients, ces derniers étant justement confondus avec les avantages d'un chauffage collectif.

En outre, une telle installation présente des avantages propres, tels qu'une puissance totale installée dans le bâtiment, qui est inférieure à la somme des puissances des chaudières individuelles à production d'eau chaude instantanée ou à la puissance d'une chaufferie collective assurant simultanément le chauffage et la production d'eau chaude sanitaire. De plus, on peut remarquer qu'un seul compteur est nécessaire pour mesurer l'ensemble de l'énergie consommée par le chauffage et le réchauffage d'eau sanitaire pour chaque local.

Avantageusement, le compteur de consommation thermique est aménagé dans le circuit primaire et de préférence, chaque entrée du conteneur est prévue éloignée de sa sortie correspondante.

Le conteneur de mélange assure notamment un équilibrage des circuits et un débit sensiblement constant pour le système de comptage de la consommation thermique.

Avantageusement, le circuit de chauffage du local comporte une pompe de circulation et une vanne de mélange, cette dernière étant disposée entre les conduites d'entrée et de sortie dudit circuit de chauffage. La présence d'une pompe de circulation dans le circuit secondaire assure avantageusement de très faibles pertes de charge dans le circuit primaire (contrairement à un système classique), la pompe de circulation étant de préférence choisie de manière à pouvoir assurer à elle seule toute la circulation de fluide dans le circuit secondaire.

L'invention concerne aussi une installation remarquable en ce qu'elle comporte un appareil qui rassemble les organes de commande et de contrôle de l'installation, ledit appareil étant branché sur les canalisations d'entrée et de sortie du circuit primaire et sur les conduites d'arrivée et de sortie du circuit secondaire.

Ledit appareil peut être aménagé au voisinage immédiat du ballon d'eau sanitaire, par exemple à côté. Une carrosserie peut aussi être imaginée pour englober l'ensemble, y compris le ballon.

Ainsi, l'utilisateur aura tous les éléments de contrôle rassemblés au même endroit, alors que seules, les canalisations et les conduites de l'installation émergent dudit appareil.

L'invention sera bien comprise à la lecture de la description qui va suivre et qui se réfère aux dessins annexés, dans lesquels:
- la figure 1 montre schématiquement une installation selon l'invention,
- la figure 2 montre un appareil selon l'invention,
- la figure 3 montre un appareil selon un autre mode de réalisation.

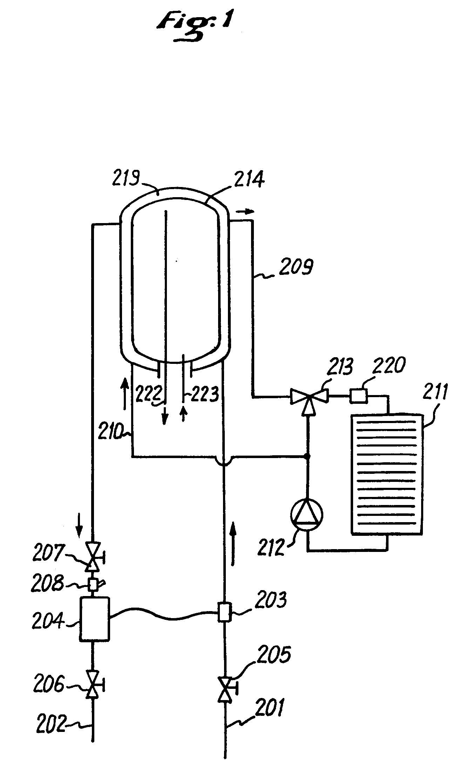

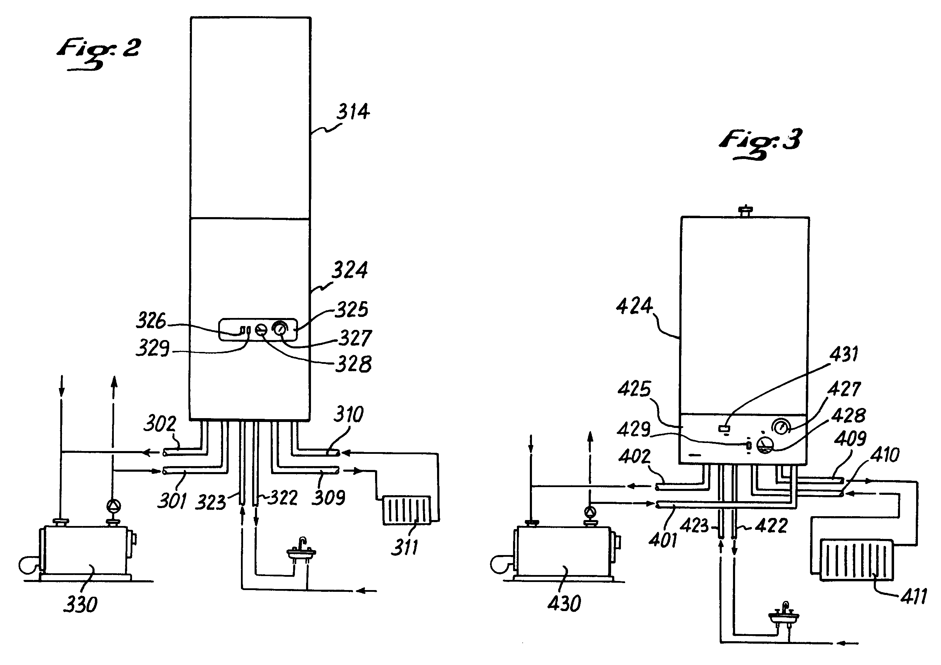

Sur les figures 1 à 3, on peut voir un circuit primaire comportant deux canalisations respectivement d'arrivée 201, 301, 401 et de retour 202, 302, 402. Ces canalisations appartiennent à une chaufferie collective à fluide caloporteur et plus particulièrement à eau chaude, dont la ou les chaudières, telles que 330 et 430 sur les figures 2 et 3, peuvent être de tout type (à charbon, bois, fuel, gaz, ...).

La canalisation d'arrivée 201 est pourvue d'une sonde de température 203 et la canalisation de retour 202 d'un compteur de consommation thermique 204, souvent dénommé compteur de calories.

La sonde de température 203 est reliée audit compteur 204 comme le montrent les dessins, tandis que ce dernier est aménagé pour calculer l'énergie dépensée entre l'arrivée et le retour, en fonction du débit et du gradient de température mesuré entre ladite arrivée et ledit retour. Toutefois, il est bien sûr tout à fait envisageable d'utiliser tout autre type de compteur.

Comme le montre aussi la figure 1, on peut prévoir une vanne de barrage 205 sur la canalisation d'arrivée et une vanne de barrage 206 sur la canalisation de retour, de même qu'une vanne d'isolement compteur 207 et un filtre 208, ces deux derniers éléments étant aménagés tous deux du côté opposé à la vanne 206 par rapport audit compteur 204.

Comme le montrent encore les figures, l'installation comporte en outre un circuit de chauffage pourvu d'une conduite d'entrée 209, 309, 409 et d'une conduite de sortie 210, 210, 410.

Le circuit de chauffage comporte des corps de chauffe 211, 311, 411 tels que des radiateurs ou des canalisations noyées dans le sol du local à chauffer. Ledit circuit de chauffage comporte aussi une pompe de circulation 212, une vanne mélangeuse 213 (automatique ou manuelle) et un thermomètre 220.

Sur le circuit de chauffage précédemment décrit, est branché un circuit de réchauffage d'eau sanitaire comportant un ballon d'eau sanitaire 214, 314 muni d'un échangeur de chaleur dont il sera question ci-après.

Le mode de réalisation représenté sur la figure 1 est tout à fait original. En effet, dans ce mode de réalisation, une chemise d'eau 219 est aménagée autour du ballon 214. Sur cette chemise d'eau, sont prévues deux entrées sur lesquelles sont branchées respectivement la canalisation d'arrivée 201 du circuit primaire et la conduite de sortie 210 du circuit de chauffage ainsi que deux sorties sur lesquelles sont branchées respectivement la canalisation de retour 202 du circuit primaire et la conduite d'entrée 209 du circuit de chauffage.

Dans ce mode de réalisation, l'échangeur de chaleur du ballon d'eau sanitaire 214 mentionné ci-avant, est constitué par l'enveloppe extérieure dudit ballon 214 (en inox par exemple) et par la chemise d'eau 219, cette dernière servant aussi de conteneur de mélange permettant notamment d'équilibrer les circuits et de garantir un débit sensiblement constant pour le compteur.

On peut aussi noter, à ce stade de la description, que pour assurer de bons mélanges, les entrées dans le conteneur 219, sont aménagées à distance de leurs sorties respectives, voire même, comme ici, à l'opposé.

Dans une telle installation, le circuit de chauffage forme un circuit secondaire, tandis que la chemise ou conteneur de mélange 219, est disposé entre les circuits primaire 201, 202 et secondaire 209, 210.

Les flèches montrent la circulation de l'eau dans les divers circuits.

On constate que le compteur 204 permet de mesurer la quantité totale d'énergie consommée. La vanne mélangeuse 213 permet de régler la température du circuit de chauffage, température mesurée par le thermomètre 220. On peut aussi remarquer que le circuit de réchauffage d'eau sanitaire est prioritaire.

Si dans le mode de réalisation représenté on ne peut pas court-circuiter le circuit de réchauffage sanitaire de telle sorte que la température dans le ballon 214 n'est pas réglable par l'utilisateur, il est clair qu'il est parfaitement possible d'utiliser, dans ce mode de réalisation, un ou des mitigeurs thermostatiques, réglables ou non par l'utilisateur. Ce ou ces mitigeurs peuvent être aménagés dans le circuit d'eau sanitaire qui comporte notamment au moins un conduit d'alimentation 222, 322, 422 et un conduit de retour 223, 323, 423 comme le montrent bien les figures 1 à 3.

L'invention concerne bien sûr l'installation de la figure 1, mais il est clair que cette installation peut être agencée de plusieurs manières. L'inventeur a notamment imaginé de rassembler tous les organes de commande et de contrôle, y compris l'éventuel mitigeur thermostatique, sous une même carrosserie formant un véritable appareil 324, 424, comme le montrent les figures 2 et 3.

Dans le mode de réalisation de la figure 2, l'appareil 324 est disposé sous le ballon 314.

Avantageusement toutefois, l'appareil 424 peut regrouper sous la même carrosserie l'ensemble des composants et le ballon, comme le montre la figure 3.

Comme on peut le voir sur les figures 2 et 3, des appareils 324 et 424, n'émergent que les canalisations 301, 302; 401, 402, les conduites 309, 310; 409, 410 et les conduits 322, 323; 422, 423 précédemment décrits (les conduits 322, 323 et 422, 423 provenant en fait directement du ballon d'eau sanitaire); tous les organes rassemblés dans l'appareil, tels que le conteneur 219, la vanne mélangeuse 213, etc, ne sont évidemment pas visibles sur les figures 2 et 3 qui montrent des appareils carrossés.

Sur les appareils 324 et 424 des figures 2 et 3, on peut voir par contre un tableau de commande respectivement 325 et 425 qui comporte, par exemple, un bouton de manoeuvre 327, 427 de la vanne mélangeuse 213, ainsi qu'un cadran de contrôle de température 328, 428 qui est asservi au thermomètre 220.

Enfin, le bouton 429 de l'appareil 424 commande, par exemple, selon des positions dites "été" et "hiver", la mise hors service, ou respectivement en fonction, de la pompe 212. D'autres moyens peuvent en outre être prévus tels, par exemple, qu'une fenêtre 431 pour permettre la lecture du compteur de consommation thermique dans le cas où celui-ci est aménagé dans l'appareil.

## Revendications

1. Installation pour le chauffage et la production d'eau chaude sanitaire, à fluide caloporteur, avec distribution par local individuel à partir d'une chaufferie collective qui comporte pour chaque local individuel à chauffer, au moins une canalisation d'arrivée (201,301,401) et une canalisation de retour (202,302,402) formant un circuit dénommé circuit primaire, lesdites canalisations étant branchées respectivement sur une première entrée et une première sortie d'un conteneur de mélange, ledit conteneur ayant une deuxième entrée et une deuxième sortie et étant aménagé entre ledit circuit primaire et un circuit dénommé circuit secondaire comportant le circuit de chauffage dudit local et un circuit de réchauffage d'eau sanitaire qui est branché sur ledit circuit de chauffage du local et qui est muni d'un échangeur de chaleur entre l'eau sanitaire et le fluide caloporteur, les conduites de sortie (210,310,410) et d'entrée (209,309,409) du circuit de chauffage du local étant branchées respectivement sur la deuxième entrée et la deuxième sortie du conteneur de mélange, installation caractérisée en ce qu'elle comporte un compteur de consommation thermique (204) aménagé de façon à lui permettre de compter les calories utilisées par tout le circuit secondaire, en ce que le circuit de réchauffage d'eau sanitaire est pourvu d'un ballon d'eau sanitaire (214,314) et en ce que l'échangeur de chaleur entre l'eau sanitaire et le fluide caloporteur est constitué par l'enveloppe extérieure du ballon (214) d'eau sanitaire et par une chemise de circulation (219) dudit fluide caloporteur qui enveloppe ledit ballon, alors que le conteneur de mélange entre les circuits respectivement primaire et secondaire est constitué par ladite chemise (219) de fluide caloporteur.

2. Installation de chauffage selon la revendication 1, caractérisée en ce que le compteur de consommation thermique (204) est aménagé dans le circuit primaire.

3. Installation selon l'une des revendications 1 et 2, caracté-risée en ce que chaque entrée du conteneur (219) est prévue éloignée de sa sortie correspondante.

4. Installation selon l'une des revendications 1 à 3, caractérisée en ce que le circuit de chauffage du local comporte une pompe de circulation (212) et une vanne de mélange (213), cette dernière étant disposée entre les conduites d'entrée et de sortie dudit circuit de chauffage.

5. Installation selon la revendication 4, caractérisée en ce que la pompe de circulation (212) est choisie de manière à pouvoir assurer à elle seule toute la circulation de fluide dans le circuit secondaire.

6. Installation selon l'une des revendications 1 à 5, caractérisée en ce qu'elle comporte un appareil (324;424) qui rassemble les organes de commande et de contrôle (326,327,328,329;427,428,429) de l'installation, ledit appareil étant branché sur les canalisations d'entrée et de sortie du circuit primaire et sur les conduites d'arrivée et de sortie du circuit secondaire.

7. Installation selon l'une des revendications 1 à 6, caractérisée en ce que ledit appareil (324) est aménagé au voisinage immédiat du ballon (314) d'eau sanitaire.

8. Installation selon l'ensemble des revendications 1 à 6, caractérisée en ce que ledit appareil (424) englobe le ballon d'eau sanitaire sous la même carrosserie.

## Claims

1. Installation for heating and sanitary hot water production with a heat-conveying fluid, distributed to each individual unit from a communal boiler installation which comprises for each individual unit to be heated at least one supply pipe (201, 301, 401) and one return pipe (202, 302, 402) forming a circuit designated the primary circuit, said pipes being connected respectively to a first inlet and a first outlet of a mixing container, said container having a second inlet and a second outlet and being disposed between said primary circuit and a circuit designated the secondary circuit comprising the heating circuit of said unit and a circuit for reheating sanitary water which is connected to said heating circuit of the unit and which is provided with a heat exchanger between the sanitary water and the heat-conveying fluid, the outlet pipe (210, 310, 410) and the inlet pipe (209, 309, 409) of the heating circuit of the unit being connected respectively to the second inlet and the second outlet of the mixing container, the installation being characterised in that it comprises a heat consumption meter (204) disposed so as to enable it to meter the calories used by the entire secondary circuit, in that the circuit for reheating sanitary water is provided with a sanitary water cylinder (214, 314) and in that the heat exchanger between the sanitary water and the heat-conveying fluid is constituted by the external casing of the sanitary water cylinder (214) and by a jacket (219) for circulation of said heat-conveying fluid which encases said cylinder, whereas the mixing container between the primary and secondary circuits respectively is constituted by said jacket (219) for heat-conveying fluid.

2. Installation for heating according to claim 1, characterised in that the heat consumption meter (204) is disposed in the primary circuit.

3. Installation according to one of claims 1 and 2, characterised in that each inlet of the container (219) is provided remote from its corresponding outlet.

4. Installation according to one of claims 1 to 3, characterised in that the heating circuit of the unit comprises a circulating pump (212) and a mixing valve (213), the latter being disposed between the inlet pipe and the outlet pipe of said heating circuit.

5. Installation according to claim 4, characterised in that the circulating pump (212) is selected so as to be able to provide all the fluid circulation in the secondary circuit on its own.

6. Installation according to one of claims 1 to 5, characterised in that it comprises an apparatus (324; 424) which brings together the elements (326, 327, 328, 329; 427, 428, 429) for controlling and monitoring the installation, said apparatus being connected to the inlet and outlet pipes of the primary circuit and to the inlet and outlet pipes of the secondary circuit.

7. Installation according to one of claims 1 to 6, characterised in that said apparatus (324) is disposed in the immediate vicinity of the sanitary water cylinder (314).

8. Installation according to all of claims 1 to 6, characterised in that said apparatus (424) includes the sanitary water cylinder under the same bodywork.

## Patentansprüche

1. Anlage zur Heizung und zur Herstellung von warmen Brauchwasser mittels eines flüssigen Wärmeträgers mit von einer Fernheizungsanlage ausgehender Verteilung auf Einzelräume, die für jeden zu beheizenden Einzelraum mindestens eine Zuführungsleitung (201, 301, 401) und eine Rückführungsleitung (202, 302, 402) aufweist, die einen Primärkreis genannten Kreislauf bilden, wobei die besagten Leitungen jeweils an einen ersten Eingang und einen ersten Ausgang eines Mischbehälters angeschlossen sind und der besagte Behälter einen zweiten Eingang und einen zweiten Ausgang aufweist und zwischen dem Primärkreis und einem Sekundärkreis genannten Kreislauf angeordnet ist, der aus dem Heizungskreis für den besagten Raum und einem Kreis zur Erwärmung von Brauchwasser besteht, welcher an den besagten Heizungskreis für den Raum angeschlossen ist und der mit einem zwischen dem Brauchwasser und dem flüssigen Wärmeträger angeordneten Wärmetauscher versehen ist, wobei die Austrittsleitungen (210, 310, 410) und die Eintrittsleitungen (209, 309, 409) des Heizungskreises für den Raum jeweils an den zweiten Eingang und den zweiten Ausgang des Mischbehälters angeschlossen sind, dadurch gekennzeichnet, daß die Anlage einen thermischen Verbrauchszähler (204) aufweist, welcher derart angeordnet ist, daß es ihm möglich ist, die im ganzen Sekundärkreis verbrauchte Wärmemenge zu zählen, daß der Kreis zur Erwärmung von Brauchwasser mit einem Brauchwasserboiler (214, 314) versehen ist und daß der Wärmetauscher zwischen dem Brauchwasser und dem flüssigen Wärmeträger durch die Außenwand des Brauchwasserboilers (214) und durch einen den besagten Boiler einhüllenden Zirkulationsmantel (219) des besagten flüssigen Wärmeträgers gebildet wird, so daß der Mischbehälter zwischen dem Primärkreis und dem Sekundärkreis durch den besagten Mantel (219) des flüssigen Wärmeträgers gebildet wird.

2. Heizungsanlage nach Anspruch 1, dadurch gekennzeichnet, daß der thermische Verbrauchszähler (204) im Primärkreis angeordnet ist.

3. Anlage nach einem der Ansprüche 1 oder 2, dadurch gekennzeichnet, daß jeder Eingang des Behälters (219) entfernt von dem ihm zugeordneten Ausgang angeordnet ist.

4. Anlage nach einem der Ansprüche 1 bis 3, dadurch gekennzeichnet, daß der Heizungskreis für den Raum eine Umwälzpumpe (212) und ein Mischventil (213) aufweist, wobei dieses letztere zwischen der Eintrittsleitung und der Austrittsleitung des besagten Heizungskreises angeordnet ist.

5. Anlage nach Anspruch 4, dadurch gekennzeichnet, daß die Umwälzpumpe (212) derart ausgewählt ist, daß sie für sich allein die gesamte Flüssigkeitszirkulation im Sekundärkreis sicherstellen kann.

6. Anlage nach einem der Ansprüche 1 bis 5, dadurch gekennzeichnet, daß sie eine Vorrichtung (324, 424) aufweist, welche die Steuer- und Kontrollorgane (326, 327, 328, 329; 427, 428, 429) der Anlage zusammenfaßt, wobei die besagte Vorrichtung an die Zuführungsleitung und die Rückführungsleitung des Primärkreises und an die Eintrittsleitung und die Austrittsleitung des Sekundärkreises angeschlossen ist.

7. Anlage nach einem der Ansprüche 1 bis 6, dadurch gekennzeichnet, daß die besagte Vorrichtung (324) in unmittelbarer Nähe des Brauchwasserboilers (314) angeordnet ist.

8. Anlage nach der Gesamtheit der Ansprüche 1 bis 6, dadurch gekennzeichnet, daß die besagte Vorrichtung (424) den Brauchwasserboiler im gleichen Gehäuse einschließt.
